Europäisches Patentamt

European Patent Office

Office européen des brevets

(19)

(11) Veröffentlichungsnummer: **0 032 692**
**B1**

(12) **EUROPÄISCHE PATENTSCHRIFT**

(45) Veröffentlichungstag der Patentschrift:
07.09.83

(51) Int. Cl.³: **G 01 P 3/489**, G 05 B 9/03

(21) Anmeldenummer: 81100126.2

(22) Anmeldetag: 09.01.81

(54) Verfahren und Einrichtung zur digitalen Frequenzselektion.

(30) Priorität: 21.01.80 DE 3002018

(43) Veröffentlichungstag der Anmeldung:
29.07.81 Patentblatt 81/30

(45) Bekanntmachung des Hinweises auf die Patenterteilung:
07.09.83 Patentblatt 83/36

(84) Benannte Vertragsstaaten:
AT BE CH DE FR GB IT LI LU NL SE

(56) Entgegenhaltungen:
DE-A-2 820 634
US-A-4 154 395
ELEKTRONIK,
Jahrgang 26, Nr. 12, Dezember 1977, Seiten 61—65
München, DE. K. MEYER: »Sicherheitssysteme
für elektronisch gesteuerte Anlagen«
IBM TECHNICAL DISCLOSURE BULLETIN,
Band 18, Nr. 9, Februar 1976, Seiten 2749, 2750 New
York, U.S.A. J. W. CANNON: »Interface for
position tracking emitters«
IBM TECHNICAL DISCLOSURE BULLETIN,
Band 19, Nr. 7, Dezember 1976, Seiten 2462, 2463
New York, U.S.A. R. L. SCHAAF: »Tachometer
checking«

(73) Patentinhaber: SIEMENS AKTIENGESELLSCHAFT,
Berlin und München Wittelsbacherplatz 2,
D-8000 München 2 (DE)

(72) Erfinder: Plohn, Gerhard, Dipl.-Ing., Schwanenstrasse 2,
D-8520 Erlangen (DE)
Erfinder: Schuh, Manfred, Wehneltstrasse 16,
D-8520 Erlangen (DE)
Erfinder: Wörner, Manfred, Dipl.-Ing., Langengraben 1,
D-8551 Kirchehrenbach (DE)

IBM TECHNICAL DISCLOSURE BULLETIN,
Band 7, Nr. 1, Juni 1964, Seiten 32, 33 New York,
U.S.A. L. W. BEARNSON et al.: »Clock pulse
checking circuit«
IBM TECHNICAL DISCLOSURE BULLETIN,
Band 8, Nr. 10, März 1966, Seiten 1361—1366 New
York, U.S.A. A. P. YEAGER: »Analog-to-digital
frequency measuring system«

Verfahren und Einrichtung zur digitalen Frequenzselektion

Die vorliegende Erfindung betrifft ein Verfahren und eine Einrichtung zur digitalen Selektion der mittleren Frequenz von drei periodischen Signalfolgen unterschiedlicher Frequenz und stellt sich die Aufgabe, praktisch im gesamten Frequenzbereich auf direktem Wege, d. h. ohne zeitraubende Umwandlung in äquivalente Zwischengrößen, von drei periodischen Signalfolgen die mit der mittleren Frequenz herauszufinden. Neben mannigfachen Anwendungen dieses Verfahrens im Bereich der Meß-, Steuer- und Regeltechnik kommt der Erfindung besondere Bedeutung in den Fällen zu, wo die Frequenz von Impulsfolgen als Meßwert übertragen wird und aus sicherheitstechnischen Gründen diese Informationsverarbeitung in mehrfach redundanten Kanälen erfolgt. Hier würden z. B. aufgrund elektrischer oder elektromagnetischer Einkopplungen sporadisch oder auch periodisch auftretende Störimpulse das Meßergebnis verfälschen können, so daß ein schnell zur Verfügung stehendes Kriterium zur Unterscheidung zwischen gestörten und ungestörten Kanälen von großem Vorteil wäre.

Die vorgenannte Aufgabe wird erfindungsgemäß durch die im Anspruch 1 angegebene Schrittfolge bzw. die Merkmale des Anspruchs 2 gelöst. Die Erfindung samt ihren weiteren Ausbildungen, welche in den abhängigen Ansprüchen gekennzeichnet sind, sollen nachstehend anhand der Zeichnung näher erläutert werden.

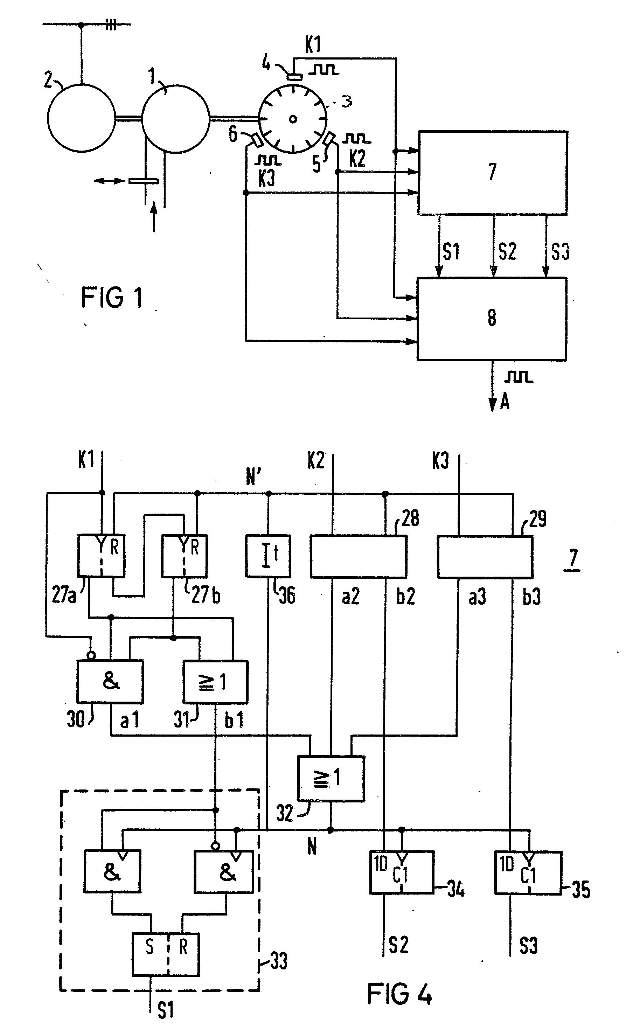

In der Fig. 1 ist ein bevorzugtes Anwendungsbeispiel der Erfindung dargestellt. Dort soll die Drehzahl einer Turbine 1, welche mit einem auf ein Netz einspeisenden Generator 2 gekuppelt ist, digital erfaßt und unter Elimination von Störimpulsen durch eine Impulsfolge dargestellt werden, deren Frequenz proportional der Turbinendrehzahl ist. Hierzu ist mit der Turbinenwelle eine Impulsscheibe 3 gekuppelt, welche an ihrem Umfang im regelmäßigen Abstand eingelassene Dauermagnete aufweist. In Umfangsnähe der Impulsscheibe 3 sind ortsfest drei Impulsgeber 4—6 angeordnet, welche beispielsweise Hallgeneratoren enthalten und bei drehender Impulsscheibe 3 rechteckförmige Signalfolgen K1, K2 und K3 liefern, deren Frequenz proportional der Turbinendrehzahl ist. Die Rechteckimpulsfolgen K1—K3 weisen ein Tastverhältnis von ungefähr 0,5 auf, was durch in den Impulsgebern 4—6 angeordnete, an sich bekannte Impulsformerstufen erreicht werden kann. Diese Rechteckimpulsfolgen sind einer Grenzwertüberwachungseinrichtung 7 und einer Selektionsschaltung 8 zugeführt, wobei auf letztere zusätzlich noch die Ausgangssignale S1, S2 und S3 der Überwachungsschaltung 7 wirken. Für den Fall, daß alle drei Rechtecksignalfolgen K1—K3 vorhanden sind, bzw. daß die Frequenz keiner dieser drei Rechteckimpulsfolgen um einen vorgebbaren Bruchteil kleiner ist als die Frequenz einer der beiden anderen Impulsfolgen, sind die Signale S1—S3 Dauersignale und stellen die dreikanalig, redundante Meßverarbeitung sicher, während im anderen Fall eines dieser Signale zu Null wird. Dadurch kann der fehlerhafte Signalkanal erkannt werden und die weitere Meßwertverarbeitung erfolgt darauf einkanalig mit einem der beiden noch intakten Signalkanälen.

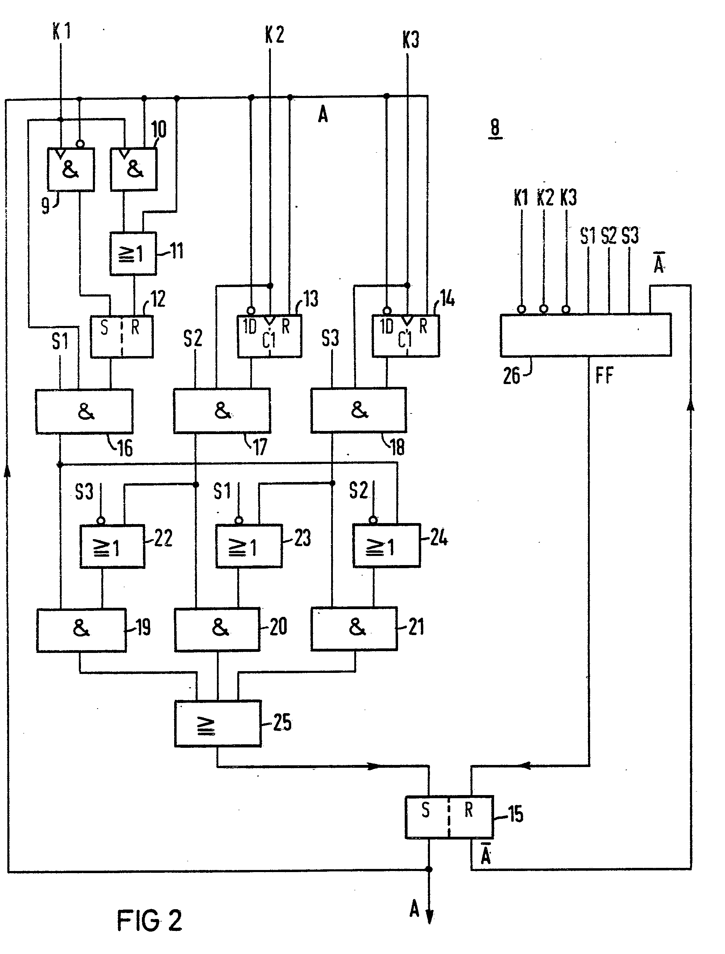

Fig. 2 zeigt eine einfache Realisierung für eine nach dem erfindungsgemäßen Verfahren arbeitende Frequenzselektionsschaltung 8, mit welcher im zuvor beschriebenen Anwendungsbeispiel in den einzelnen Kanälen auftretende Störimpulse unterdrückt werden. Die mit K1 bezeichnete Rechteckimpulsfolge ist den dynamischen Eingängen zweier UND-Glieder 9 und 10 zugeführt, deren andere Eingänge von dem Ausgangssignal A eines Ausgangskippgliedes 15 beaufschlagt sind. Das Ausgangssignal des UND-Gliedes 10 ist zusammen mit dem Ausgangssignal A den Eingängen eines ODER-Gliedes 11 zugeführt, dessen Ausgang den Rückstelleingang einer weiteren bistabilen Kippstufe 12 beaufschlagt, während das Ausgangssignal des UND-Gliedes 9 auf den mit S bezeichneten Setzeingang dieses Kippgliedes wirkt. Die mit 13 und 14 bezeichneten Blocksymbole in den den Rechteckimpulsfolgen K2 und K3 zugeordneten Informationskanälen weisen den gleichen schaltungstechnischen Aufbau der Schaltkreiselemente 9—12 auf. Die den Setzeingängen der bistabilen Kippglieder 12 zugeordneten Ausgänge sind zusammen mit der jeweiligen Rechteckimpulsfolge K1—K3 einer Gruppe von ersten UND-Gliedern 16—18 zugeführt, deren Ausgänge den Eingängen einer zweiten Gruppe von UND-Gliedern 19—21 zugeführt sind, an deren zweitem Eingang jeweils über ODER-Glieder 22—24 das Ausgangssignal eines einem anderen Informationskanal zugeordneten UND-Gliedes der ersten Gruppe wirksam wird. Die Ausgänge der zweiten Gruppe von UND-Gliedern 19—21 wirken über ein ODER-Glied 25 auf den Setzeingang des Ausgangskippgliedes 15. Den UND-Gattern 16—18 sind die Ausgangssignale S1—S3 der Überwachungsschaltung 7 direkt und den ODER-Gliedern 22—24 invertiert zugeführt. Der im rechten Teil der Fig. 2 dargestellte Schaltungsblock 26 ist völlig identisch wie der bisher beschriebene Teil der Selektionsschaltung aufgebaut. Bezüglich seiner Beaufschlagung mit Eingangssignalen unterscheidet er sich nur dadurch, daß die Rechteckimpulssignale K1—K3 ihm invertiert zugeführt werden und anstelle des mit A bezeichneten Ausgangssignals des Ausgangskippgliedes 11 ihr komplementäres Signal $\bar{A}$ tritt. Unter der Voraussetzung, daß die Signale S1—S3 den Wert 1 aufweisen, d. h. kein Kanal ausgefallen ist oder eine zu niedrige Impulsfrequenz aufweist, arbeitet die in Fig. 2 wiedergegebene Schaltung, deren Darstellungsweise der DIN-Norm 40 700, Teil 14 vom Juli 1976 entspricht, nach dem im Hauptanspruch angegebenen Verfahren: Hat sich, ausgehend vom Wert 1 des Ausgangssignals A des bistabilen Kippgliedes 15, mit welchem die bistabilen Kippglieder 12 rückgestellt wurden, dieses auf den Wert Null geändert, dann sind die bistabilen Kippstufen 12 zum Setzen durch die Impulse der Rechteckimpulsfolgen K1 – K3 vorbereitet. Die ansteigende Flanke des ersten ab dann eintreffenden Impulses bringt die in dem ihm zugeordneten Kanal angeordnete bistabile Kippstufe 12 in den Zustand, in dem an dem ihrem Setzeingang zugeordneten Ausgang ein 1-Signal auftritt und bei der nächsten darauffolgenden ansteigenden Flanke eines Impulses in einem der beiden anderen Informationskanäle gelangt — sofern der zuvor eingetroffene Impuls noch andauert — über eines der UND-Glieder 19 – 21 und das ODER-Glied 25 ein Setzsignal auf das Ausgangskippglied 15, worauf sich dessen Schaltzustand so ändert, daß nunmehr das Ausgangssignal A den Wert 1 annimmt, so daß auf die linke Hälfte der Selektionsschaltung 8 die Rechteckimpulssignale K1 – K3 nicht mehr zur Wirkung kommen. Die invertierten Werte dieser Rechtecksignalimpulsfolgen wirken jetzt auf die rechte Hälfte (Schaltungsblock 26) der Selektionsschaltung 8 und haben in analoger Weise nun zur Wirkung, daß das Ausgangssignal $\overline{A}$ solange den Wert Null aufweist, bis aufeinanderfolgend zwei abfallende Flanken bei verschiedenen Rechteckimpulsfolgen K1 – K3 aufgetreten sind und zum Zeitpunkt, in welchem die zweite abfallende Impulsflanke aufgetreten ist, die zugehörige Impulspause der zeitlich vorangegangenen abfallenden Impulsflanke der anderen Impulsfolge noch andauert.

Für den Fall, daß eines der Signale S1 – S3 nicht den Wert 1 aufweist, d. h., daß also ein Kanal als defekt erkannt wurde, werden, wie aus der Fig. 2 ersichtlich, eines der UND-Gatter 16 – 18 gesperrt und eines der ODER-Gatter 22 – 24 dauernd durchgeschaltet, so daß nur eines der Signale K1 – K3 ein Setzen und sein komplementäres Signal über die rechte Hälfte der Selektionsschaltung 8 ein Rückstellen des Ausgangskippgliedes 15 bewirken kann. Würde beispielsweise der Kanal mit der Rechteckimpulsfolge K3 ausfallen, dann würde S3 ein Null-Signal und S1 sowie S2 1-Signale sein. Demzufolge sind die UND-Gatter 18, 20 und 21 gesperrt, das ODER-Gatter 22 ist dauernd geöffnet und nur die vom Signal K1 herrührenden, ansteigenden Impulsflanken können über das UND-Gatter 19 ein Setzen des Kippgliedes 15 bewirken, während von der rechten Hälfte (Schaltungsblock 26) der Selektionsschaltung nur die absteigenden Flanken des Impulszuges K1 ein Rückstellen des Ausgangskippgliedes bewirken können. Damit folgt beim Angenommenen Fehlerfall das Ausgangssignal A der Rechteckimpulsfolge K1.

Die nach dem erfindungsgemäßen Verfahren arbeitende Schaltung nach Fig. 2 ermöglicht es grundsätzlich, von drei Impulsfolgen unterschiedlicher Frequenz die mit der mittleren Frequenz zu selektieren und bewirkt für den in Fig. 1 dargestellten Anwendungsfall, daß eingestreute Störimpulse, welche eine Informationsverfälschung verursachen würden, zuverlässig unterdrückt werden.

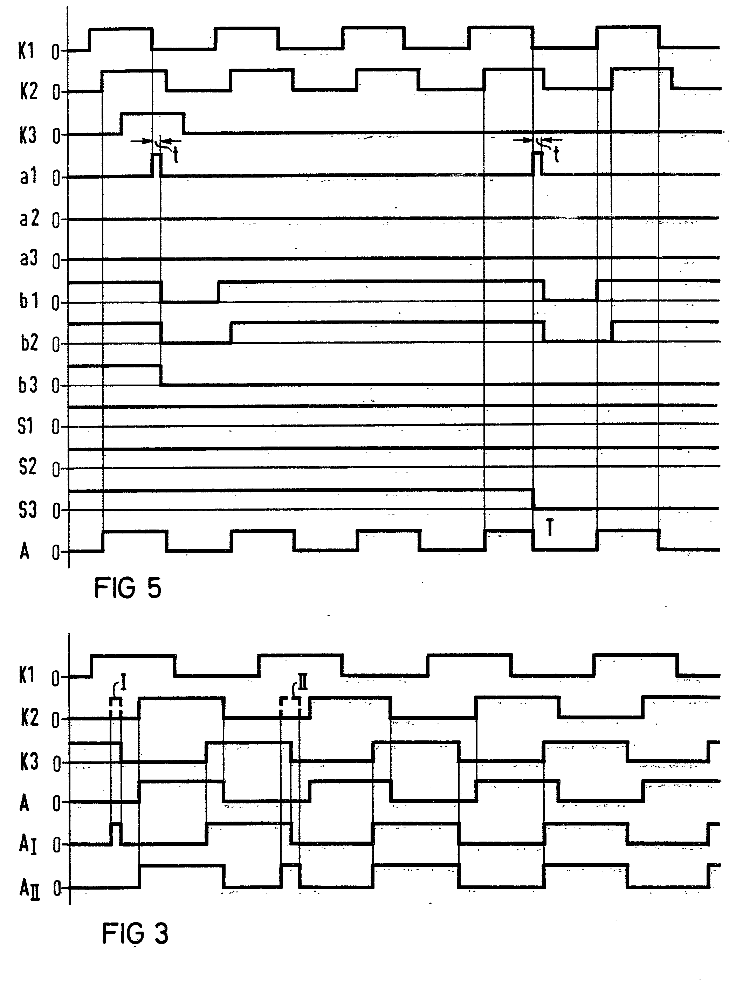

Fig. 3 zeigt hierfür ein Beispiel. Es sind dort die zeitlichen Signalverläufe der einzelnen Rechteckimpulsfolgen K1, K2 und K3 dargestellt, sowie der Verlauf des Ausgangssignals A der bistabilen Kippstufe 15 für den Fall, daß keine Störimpulse auftreten. Für den Fall, daß der mit I bezeichnete Störimpuls bei der Rechteckimpulsfolge K2 auftritt, ergibt sich der Verlauf des Ausgangssignals der bistabilen Kippstufe 15 mit $A_I$, beim mit II bezeichneten Störimpuls mit $A_{II}$. Aus der Fig. 3 wird deutlich, daß die Störimpulse lediglich eine für die Pulszählung unbeachtliche Änderung des Tastverhältnisses im Ausgangssignal, jedoch keine Frequenzerhöhung bewirken. Während das Ausgangssignal im ungestörten Fall dem Signal K2 folgte, bestimmt nach dem Auftreten eines Störimpulses das Signal K3 Pausenlage und Frequenz des Ausgangssignals.

Fig. 4 zeigt ein Ausführungsbeispiel für die in Fig. 1 mit 7 bezeichnete Grenzwertüberwachungsschaltung. Für den der Impulsfolge K1 zugeordneten Kanal sind die binären Schaltelemente ausführlich dargestellt — wiederum entsprechend der DIN-Norm 40 700, Teil 14 vom Juli 1976 — während entsprechende Schaltelemente auch in den beiden anderen Kanälen vorgesehen und dort komprimiert dargestellt worden sind. Jede Impulsfolge beaufschlagt einen aus zwei T-Kippgliedern, z. B. 27a und 27b, bestehenden 2-Bit-Zähler, dessen den Setzeingängen zugeordnete Ausgänge jeweils mit den Eingängen eines UND-Gatters 30 und eines ODER-Gatters 31 verbunden sind. Die Ausgänge der drei UND-Gatter sind mit a1, a2 und a3 und die Ausgänge der ODER-Gatter mit b1, b2 und b3 bezeichnet. Die Ausgänge der UND-Gatter sind mit den Eingängen eines gemeinsamen ODER-Gatters 32 verbunden, dessen Ausgangssignal N einerseits die Übernahme des Ausgangssignals des dem Zähler nachgeordneten ODER-Gatters (z. B. Gatter 31 im Kanal K1) durch D-(Daten)-Kippgliedern 33 – 35 bewirkt und andererseits nach einer durch ein Verzögerungsglied 36 verursachten kleinen Verzögerung der Zeitdauer t ein Rückstellen der Zählstufen sämtlicher Zähler veranlaßt. Nach jedem dritten Impuls erscheint jeweils am Ausgang a1, a2 bzw. a3 ein 1-Signal, während ein 1-Signal am Ausgang b1, b2 bzw. b3 der ODER-Gatter bereits nach dem ersten, auf die jeweilige Rückstellung folgenden Impuls jedes Kanals auftritt. Somit entsteht an den Ausgängen der Kippglieder 33 – 35 nur dann ein 1-Signal, wenn keine Frequenz der Rechteckimpulsfolgen K1 – K3 kleiner ist als ein Drittel der Frequenz der beiden anderen Rechteckimpulsfolgen. Weicht die Frequenz einer Rechteckimpulsfolge um weniger als dieser Bruchteil ab, z. B. bei Drahtbruch im Informationskanal, dann erscheint am Ausgang des ihr zugeordneten Kippgliedes 33 bzw. 34 bzw. 35 ein Null-Signal, womit der gestörte Kanal erkannt wird.

Fig. 5 dient zur Veranschaulichung der Wirkungsweise der Grenzwertüberwachungsschaltung 7 nach Fig. 4 anhand von Zeitdiagrammen für die Verläufe der Signale K1—K3, a1—a3, b1—b3, S1—S3 und des Signals A des Ausgangskippgliedes 15, wobei angenommen worden ist, daß das Signal K3 ausgefallen ist. Nach dem Ende des darauffolgenden dritten Impulses des Signals K1 wird dieser fehlerhafte Zustand erkannt und führt dazu, daß das Signal S3 zu Null wird, was als Fehlermeldung verwendet werden kann. Diese Signaländerung führt, wie zuvor beschrieben, zu einer Umschaltung der Überwachungsschaltung 8 auf einkanaligen Betrieb und das Ausgangssignal A des Kippgliedes 15 folgt nunmehr dem Signal K1.

Das der Überwachungsschaltung zugrundeliegende Prinzip, die einzelnen Kanäle jeweils daraufhin zu überwachen, ob während einer bestimmten Anzahl n von Impulsen in einem Kanal mindestens eine Anzahl m von Impulsen in den übrigen Kanälen aufgetreten ist, ist keineswegs auf den in Fig. 4 dargestellten Fall von $n = 3$ und $m = 1$ beschränkt. m und n können vielmehr beliebig gewählt werden, sofern $n > m$ ist. Werden andere Werte für m und n gewählt und damit ein anderes Ansprechverhältnis n/m eingestellt, dann ist in der Schaltung nach Fig. 4 lediglich die Stufenzahl des Binärzählers und die seinen Zählerstand abfragenden Gatter entsprechend zu ändern.

Insgesamt gesehen wird mit der Erfindung eine schnell und zuverlässig reagierende Überwachungs- und Selektionsschaltung geschaffen, welche eine große Verfügbarkeit der zu überwachenden Kanäle sicherstellt, indem bei großen Frequenzabweichungen in den Kanälen derjenige mit der kleinsten Frequenz erkannt und gemeldet werden kann, woraufhin unter Eliminierung des gestörten Kanals selbsttätig auf einkanalige Verarbeitung umgeschaltet wird, während kleine, durch Störimpulse bewirkte Frequenzänderungen durch Selektion der mittleren Frequenz unterdrückt werden.

**Patentansprüche**

1. Verfahren zur digitalen Selektion der mittleren von drei Frequenzen dreier periodischer Signalfolgen unterschiedlicher Frequenz, gekennzeichnet durch folgende Schritte:

a)   die einzelnen Signalfolgen werden in Rechteckimpulsfolgen mit jeweils entsprechender Frequenz und einem Tastverhältnis von jeweils ungefähr 0,5 umgeformt;

b)   die Erzeugung eines Ausgangsimpulses (A) wird jeweils zu dem Zeitpunkt begonnen, zu dem eine ansteigende Flanke einer der Rechteckimpulsfolgen auf eine nach Beginn einer Ausgangsimpulspause ansteigende Flanke einer der beiden anderen Rechteckimpulsfolgen folgt und der zugehörige Impuls dieser anderen Rechteckimpulsfolge noch andauert;

c)   der Ausgangsimpuls wird jeweils beendet, wenn eine abfallende Flanke einer der Rechteckimpulsfolgen auf eine nach Beginn eines Ausgangsimpulses auftretende abfallende Flanke einer der beiden anderen Rechteckimpulsfolgen folgt und die zugehörige Impulspause dieser anderen Rechteckimpulsfolge noch andauert.

2. Einrichtung zur Durchführung des Verfahrens nach Anspruch 1, insbesondere zur Störimpulsunterdrückung bei der Drehzahlerfassung von Turbinen mittels dreier redundanter, von der Turbinenwelle angeregter Impulsgeber, gekennzeichnet durch folgende Merkmale:

a)   zur Umformung der drei zu selektierenden periodischen Signalfolgen in Rechteckimpulsfolgen jeweils entsprechender Frequenz und mit einem Tastverhältnis von jeweils ungefähr 0,5 sind drei Impulsformerstufen vorgesehen;

b)   zur Erzeugung des Ausgangsimpulses ist ein bistabiles Ausgangskippglied (15) vorgesehen, dessen Setzeingang (S) und dessen Löscheingang (R) vom Ausgang je eines ODER-Gliedes (25) beaufschlagt sind;

c)   es ist pro Rechteckimpulsfolge jeweils ein nur von ansteigenden sowie ein nur von den abfallenden Flanken dieser Rechteckimpulsfolge umsteuerbares bistabiles Kippglied (12) vorgesehen, wobei der Rückstelleingang der von den ansteigenden Flanken gesteuerten Kippglieder jeweils mit dem dem Setzeingang und der Rückstelleingang der von den abfallenden Flanken gesteuerten Kippglieder jeweils mit dem dem Löscheingang des Ausgangskippgliedes (15) zugeordneten Ausgang verbunden ist;

d)   der Ausgang jedes mit den ansteigenden bzw. mit den abfallenden Flanken umsteuerbaren bistabilen Kippgliedes (12) ist zusammen mit der ihm zugeordneten Rechteckimpulsfolge mit jeweils einem von zwei Eingängen jeweils eines ersten UND-Gatters (16—18) verbunden, dessen Ausgang den Eingang jeweils eines zweiten UND-Gatters (19—21) beaufschlagt, dessen anderer Eingang mit dem Ausgang eines der ersten UND-Gatter einer der anderen Rechteckimpulsfolgen verbunden ist;

e)   die Ausgänge der drei den ansteigenden bzw. den abfallenden Flanken zugeordneten zweiten UND-Gatter sind jeweils auf die Eingänge des einen bzw. des anderen der ODER-Gatter (25) geführt.

3. Einrichtung nach Anspruch 2, dadurch gekennzeichnet, daß eine Grenzwertüberwachungsschaltung (7) für den Frequenzunter-

chied zwischen den einzelnen Rechteckimpuls-folgen vorgesehen ist, die für jede der Rechteckimpulsfolgen ein Ausgangssignal (S1, S2, S3) mit einem ersten Pegel bei Einhaltung eines vorgegebenen Grenzwerts der Frequenz und einem zweiten Pegel bei Überschreitung dieses Grenzwerts erzeugt, wobei die Ausgangssignale (S1, S2, S3) mit dritten Eingängen der ersten UND-Gatter (16—18) verbunden sind und die dazu komplementären Ausgangssignale mit den die Eingänge der zweiten UND-Gatter (19—21) beaufschlagenden Ausgängen der ersten UND-Gatter (16—18) einer der anderen Rechteckim-pulsfolgen geordnet sind.

4. Einrichtung nach Anspruch 3, dadurch gekennzeichnet, daß in der Grenzwertüberwachungsschaltung (7) pro Rechteckimpulsfolge ein 2-Bit-Zähler (27a, 27b) zur Zählung ihrer Impulse vorgesehen ist, wobei nach jedem dritten Impuls einer Rechteckimpulsfolge die Signale der jeweils ersten Zählstufen der 2-Bit-Zähler über ein weiteres ODER-Glied (32) von jeweils einer der jeweiligen Rechteckimpuls-folge zugeordneten weiteren bistabilen Kippstu-fe (33—35) übernommen werden und über ein gemeinsames Verzögerungsglied (36) sämtliche Zähler mit einem Rückstellsignal vom weiteren ODER-Glied (N') beaufschlagt sind.

## Claims

1. Process for the digital selection of the median of three frequencies of three periodical sequences of signals having different frequencies, characterised by the following steps:

a) the individual sequences of signals are converted into sequences of square-wave impulses with a corresponding frequency in each case and a duty cycle of approximately 0.5 in each case;

b) the production of an output impulse (A) is started in each case at the time when a leading edge of one of the sequences of square-wave impulses follows a leading edge occurring after the beginning of an output impulse pause, of one of the other two sequences of square-wave impulses, and the associated impulse of said other sequence of square-wave impulses is still continuing;

c) the output impulse is terminated in each case when a trailing edge of one of the sequences of square-wave impulses follows a trailing edge occurring after the beginning of an output impulse, of one of the other two sequences of square-wave impulses and the associated impulse pause of said other sequence of square-wave impulses is still continuing.

2. Arrangement to effect the process according to claim 1, in particular for the suppression of disturbance impulses when determining the speed of turbines by means of three redundant impulse transmitters excited by the turbine shaft, characterised by the following features:

a) three impulse-shaping stages are provided to convert the three periodical signal sequences to be selected into square-wave impulse sequences each of a corresponding frequency and having a duty cycle of approximately 0.5 in each case;

b) there is provided to produce the output impulse a bistable output trigger stage (15), whose set input (S) and whose reset input (R) is acted upon by the output of one respective OR member (25);

c) there is provided for each sequence of square-wave impulses one bistable trigger stage (12) controllable only by leading edges of said sequence of square-wave impulses and one controllable only by the trailing edges, the reset input of the trigger stages controlled by the leading edges being connected to the output associated with the set input and the reset input of the trigger stages controlled by the trailing edges being connected to the output associated with the reset input of the output trigger stage (15);

d) the outpout of each bistable trigger stage (12) controllable with the leading or respectively trailing edges is connected, together with the sequence of square-wave impulses associated with it, to one of two inputs of respectively one first AND-gate (16—18), whose outpout is applied to the input of respectively one second AND gate (19—21), whose other input is connected to the output of one of the first AND gates which is connected to one of the other sequences of square-wave impulses;

e) the outputs of the three second AND gates associated with the leading or respectively trailing edges are fed in each case to the input of one of the other OR gate (25).

3. Arrangement according to claim 2, characterised in that a threshold value monitoring circuit (7) for the difference in frequency between the individual sequences of square-wave impulses is provided which, for each sequence of square-wave impulses, produces an output signal (S1, S2, S3) having a first level when a predetermined threshold frequency value is adhered to and a second level when this threshold value is exceeded, the output signals (S1, S2, S3) being connected to third inputs of the first AND gates (16—18) and signals complementary to said output signals being ORed with the outputs, applied to the inputs of the second AND gates (19—21), of the first AND gates (16—18) of one of the other sequences of square-wave impulses.

4. Arrangement according to claim 3, characterised in that there is provided in the threshold value monitoring circuit (7) for each sequence of square-wave impulses a 2-bit counter (27a, 27b) for counting its impulses, and after each third impulse of a sequence of square-wave impulses, the signals of the first respective counting stages of the 2-bit counters being taken over via a further OR member (32) in each case by a further bistable trigger stage (33—35) associated with one of the respective sequences of square-wave impulses, and all the counters being acted upon by a reset signal from the further OR member (N') via a common delay member (36).

**Revendications**

1. Procédé de sélection numérique de la fréquence médiane de trois fréquences de trois trains de signaux périodes de fréquence différente, caractérisé par les phases opératoires suivantes:

a) on transforme les différents trains d'impulsions en trains d'impulsions rectangulaires à fréquence respective correspondante et à rapport cyclique de respectivement environ 0,5;

b) la production d'une impulsion de sortie (A) est respectivement commencée à l'instant où un flanc croissant de l'un des trains d'impulsions rectangulaires suit un flanc de l'un des deux autres trains d'impulsions rectangulaires, qui croît après le commencement de l'intervalle entre impulsions de sortie, et auquel dure encore l'impulsion associée de cet autre train d'impulsions rectangulaires;

c) le signal de sortie considéré est terminé lors qu'un flanc décroissant de l'un des trois trains d'impulsions rectangulaires suit un flanc décroissant de l'un des deux autres trains d'impulsions rectangulaires qui apparaît après le commencement d'une impulsion de sortie et lorsque l'intervalle associé entre deux impulsions, de cet autre train d'impulsion, dure encore.

2. Dispositif pour la mise en œuvre du procédé selon la revendication 1, en particulier pour la suppression d'impulsions parasites lors de la saisie de la vitesse de rotation de turbines à l'aide de trois générateurs impulsions redondants et excités par l'arbre de la turbine, remarquable par les caractéristiques suivantes:

a) pour transformer les trois trains de signaux périodiques à sélectionner, en trains d'impulsions rectangulaires de fréquence respective correspondante et avec un rapport cyclique respectif d'environ 0,5, on prévoit trois étages de formateurs d'impulsions;

b) pour produire l'impulsion de sortie, il est prévu un élément de bascule de sortie bistable (15) dont l'entrée de commande (SS) et dont l'entrée d'effacement (R) est chargée respectivement par un circuit OU (25);

c) il est prévu, par train d'impulsions rectangulaires, un élément de bascule bistable (12) qui n'est commutable que par les flancs croissants, et un élément de bascule bistable qui n'est commutable que par les flancs décroissants de ce train d'impulsions rectangulaires, l'entrée de la remise à l'état initial des éléments de bascule bistable qui sont commandés par les flancs croissants étant reliés à la sortie associée à l'entrée de remise à l'état initial de l'élément à bascule de sortie (15), alors que l'entrée de remise à l'état initial des éléments de bascule commandés par les flancs décroissants est reliée à l'entrée associée à l'entrée d'effacement de l'élément de bascule de sortie (15);

d) la sortie de chaque élément de bascule bistable respectif (12) susceptible d'être commandée par les flancs croissants ou décroissants est reliée, avec le train d'impulsions rectangulaires qui lui est associé, respectivement à l'une des deux entrées d'un premier circuit ET (16—18), dont la sortie charge l'entrée d'un second circuit ET respectif (19—21), dont l'autre entrée est reliée à la sortie de l'un des premiers circuits ET de l'un des duex autres trains d'impulsions rectangulaires;

e) les sorties des trois seconds circuits ET, associés au flanc croissant ou décroissant sont respectivement reliées aux entrées de l'un ou de l'autre circuit OU (25).

3. Dispositif selon la revendication 2, caractérisé par le fait qu'il est prévu pour la différence de fréquence entre les différents trains d'impulsions rectangulaires, un circuit de surveillance de valeur limite (7) qui produit pour chaque train d'impulsions rectangulaires un signal de sortie (S1, S2, S3) d'un premier niveau lorsqu'une valeur limite de fréquence prédéterminée est maintenue, et d'un second niveau lors du dépassement de cette valeur limite, les signaux de sortie (S1, S2, S3) étant reliés avec des troisièmes entrées des premiers circuits ET (16—18), alors que les signaux de sortie qui leurs sont complémentaires sont associés aux sorties des premiers circuits ET (16—18) de l'un des autres trains d'impulsions rectangulaires, qui sont chargées par les entrées du second circuit ET (19—21).

4. Dispositif selon la revendication 3, caractérisé par le fait qu'il est prévu dans le circuit de surveillance ce valeur limite (7), par train d'impulsions rectangulaires, un compteur à deux bits (27a, 27b) pour compter ses impulsions, la réalisation étant telle qu'après chaque troisième impulsion d'un train d'impulsions rectangulaires, les signaux des premiers étages de comptage des compteurs à deux bits sont pris en charge, par l'intermédiaire d'un circuit OU supplémentaire (32), par un étage à bascule bistable supplémentaire (33, 35) associée au train d'impulsions rectangulaires respectifs, et que, par l'intermédiaire d'un organe à retard commun (36), tous les compteurs sont chargés par un signal de remise à l'état initial provenant d'un circuit OU supplémentaire (N').

FIG 1

FIG 4

FIG 2

FIG 5

FIG 3